# EUROPÄISCHE PATENTSCHRIFT

(11) **EP 2 693 011 B1**
(45) Veröffentlichungstag und Bekanntmachung des Hinweises auf die Patenterteilung: **02.03.2016**
(21) Anmeldenummer: 13175783.3
(22) Anmeldetag: 09.07.2013
(51) Int. Cl.: F01N 3/04, F02D 9/04, F16K 1/22, F02D 9/10

(54) **Abgasklappenanordnung mit integriertem Bypass**
Exhaust gas valve assembly with integrated bypass
Agencement de clapet de gaz d'échappement avec dérivation intégrée

(30) Priorität: 30.07.2012 DE 102012106888
(43) Veröffentlichungstag der Anmeldung: 05.02.2014
(73) Patentinhaber: Benteler Automobiltechnik GmbH, 33102 Paderborn (DE)
(72) Erfinder: van den Eijkel, Pieter, 52146 Würselen (DE); Jans, Leo, 5708HN Helmond (NL)
(74) Vertreter: Griepenstroh, Jörg

(56) Entgegenhaltungen:
- EP-A1- 0 699 827
- EP-A1- 2 305 978
- EP-B1- 1 291 509
- US-A1- 2007 107 981
- US-A1- 2011 041 482

## Beschreibung

Die vorliegende Erfindung betrifft eine Abgasklappenanordnung zur Anordnung in einem Abgasstrang eines Kraftfahrzeugs gemäß den Merkmalen im Oberbegriff von Patentanspruch 1.

Die vorliegende Erfindung betrifft weiterhin einen Abgaswärmetauscher für ein Kraftfahrzeug gemäß den Merkmalen im Oberbegriff von Patentanspruch 14.

In Abgasanlagen bzw. Abgasrohren von Kraftfahrzeugen mit Verbrennungskraftmaschinen sind bewegliche Klappen angeordnet um bestimmte Abschnitte der Abgasanlage ganz oder teilweise zu verschließen oder freizugeben oder den Strömungswiderstand für das Abgas in einem Abgasrohr zu erhöhen oder die Schalldämpfakustik zu beeinflussen. Die Klappen werden während des Betriebes des Kraftfahrzeugs dabei von einem Aktuator bedient, wobei der Aktuator insbesondere als pneumatisch betätigter Unterdruckaktuator ausgebildet ist. Beispielsweise ist eine solche Klappanordnung aus der DE 10 2010 027 930 A1 bekannt.

Ferner ist es aus dem Stand der Technik bekannt, Abgase nicht direkt über die Abgasanlage in die Umwelt abzuleiten, sondern die im Abgas enthaltene Restwärme für den Betrieb des Kraftfahrzeuges zu nutzen. Beispielsweise wird die im Abgas enthaltende Restenergie zum Betreiben einer Auflademaschine genutzt oder aber die enthaltene Wärme zum Beheizen verschiedener Funktionen, beispielsweise zum Vorheizen von Schmierstoffen für Getriebe oder aber den Kurbelbetrieb der Verbrennungskraftmaschine. Ebenfalls ist es bekannt, die im Abgas enthaltene Wärmeenergie zum Beheizen des Kraftfahrzeuginnenraumes zu nutzen. Für diese Nutzungsmöglichkeiten sind insbesondere Abgaswärmetauscher bekannt, durch die das Abgas geleitet wird und dann entsprechend auf ein anderes Medium, beispielsweise Frischluft zum Klimatisieren des Fahrzeuginnenraumes, übertragen wird.

Nach dem durchströmen des Abgases durch den Wärmetauscher wird dieses dann dem weiteren Abgasstrang wieder zugeführt und durch verschiedene Katalysatoren gereinigt und/oder durch Schalldämpfer gedämpft und anschließend an die Umwelt abgegeben. Die Durchströmung eines Wärmetauschers ist jedoch nicht zu jedem Betriebszeitpunkt gewünscht, weshalb Abgaswegeventile aus dem Stand der Technik bekannt sind, mit dem das Abgas durch verschiedene Leitungen des Abgasstranges leitbar sind. Als einfachste Ausführungsvariante ist ein solches Ventil als Y-Strömungsventil oder aber ein Dreiwegeventil bekannt, wobei das Abgas durch einen ersten Weg kommend entweder in den zweiten oder aber den dritten Weg oder aber auch in beide weiteren Wege gleichzeitig geleitet wird.

Ferner ist aus der EP 1 291 509 B1 ein Ventilkomponentensatz für eine interne Bypassströmung bekannt, bei der in einem äußeren Abgasstrang ein innerer Abgasstrang angeordnet ist, wobei der innere Abgasstrang durch eine Schwenkklappe öffnenbar und/oder verschließbar ist. Auch sind aus der US 2007/0107981 A1 sowie aus der EP 0 699 827 A1 Abgasklappenanordnungen bekannt, bei denen eine Abgasklappe schwenkbar gelagert ist, um einen Abgaskanal freizugeben oder aber abzusperren.

Die innere Abgasklappe wird dabei wiederum von einem pneumatisch betätigten Aktuator je nach Anforderung in eine Öffnungs- oder Schließstellung oder aber auch in eine Zwischenstellung verschwenkt.

Aufgabe der vorliegenden Erfindung ist es, ausgehend vom Stand der Technik einen Abgaswärmetauscher mit einer Abgasklappenanordnung bereitzustellen, mit dem es möglich ist, strömendes Abgas in verschiedene Abgaswege zu leiten, die kompakte Außenabmessungen aufweist, besonders einfach betätigbar ist und kostengünstig herstellbar ist.

Die zuvor genannte Aufgabe wird mit einer Abgasklappenanordnung für einen Abgasstrang eines Kraftfahrzeuges gemäß den Merkmalen in Patentanspruch 1 gelöst.

Die zuvor genannte Aufgabe wird weiterhin mit einem Abgaswärmetauscher gemäß den Merkmalen im Patentanspruch 14 gelöst.

Vorteilhafte Ausführungsvarianten der vorliegenden Erfindung sind Bestandteil der abhängigen Patentansprüche.

Die erfindungsgemäße Abgasklappenanordnung für ein Abgasstrang eines Kraftfahrzeuges, wobei die Abgasklappenanordnung eine durch ein Abgasrohr ausgebildete Abgasleitung aufweist, in der konzentrisch innenliegend eine durch ein Bypassrohr ausgebildete Bypassleitung angeordnet ist, wobei das Bypassrohr durch eine drehbare Bypassklappe verschließbar ist, ist dadurch gekennzeichnet, dass die Abgasleitung durch eine drehbare Abgasklappe verschließbar ist, wobei die Abgasklappe eine Ausnehmung aufweist, in der das Bypassrohr angeordnet ist und die Bypassklappe und die Abgasklappe um eine Rotationsachse auf der gleichen Welle drehbar gelagert sind.

Die erfindungsgemäße Abgasklappenanordnung ist somit mindestens als Dreiwegeventil ausgebildet, wobei ein von einer Verbrennungskraftmaschine kommendes Abgas auf die Abgasklappenanordnung trifft. In der Abgasklappenanordnung selbst ist außenliegend ein erster Strömungskanal mithin die Abgasleitung angeordnet ist, wobei in der Abgasleitung selber ein innenliegender zweiter Strömungskanal angeordnet ist, mithin das hier bezeichnete Bypassrohr. Es ist somit möglich, das Abgas entweder durch den außenliegenden Strömungskanal, also die Abgasleitung oder aber den innenliegenden Strömungskanal also durch das Abgasrohr zu leiten oder aber auch durch beide Strömungskanäle, wobei die jeweiligen Durchflussmengen durch die Bypassklappe oder aber die Abgasklappe einstellbar sind.

Die erfindungsgemäße Abgasklappenanordnung ermöglicht somit eine in den äußeren Bauraumabmessung besonders kompakte Bauweise, da beide Strömungskanäle ineinanderliegend ausgebildet sind und zugleich eine gute Einstellbarkeit, da sowohl der Durchfluss durch die außenliegende Abgasleitung durch die Abgasklappe einstellbar ist, als auch der Durchfluss durch das Bypassrohr durch die Bypassklappe einstellbar ist.

Insbesondere wird die kompakte Bauweise aufgrund der Ausnehmung in der Abgasklappe sowie das darin angeordnete Bypassrohr ermöglicht. Ferner wird durch den konzentrischen Aufbau eine verschiedenartige Anströmung der beiden Teile der Abgasklappe ermöglicht, wodurch nur geringe Stellkräfte notwendig sind um die Abgasklappe zu verstellen. Analoge Ausführungen gelten für die Bypassklappe.

Insbesondere sind die Abgasklappe und/oder die Bypassklappe als drehbare Butterflyklappe ausgebildet. Hierzu sind die Abgasklappe und/oder die Bypassklappe drehbar um eine Rotationsachse gelagert, wobei die Bypassklappe und die Abgasklappe auf einer gleichen Welle drehbar gelagert sind. Bezüglich der gleichen Rotationsachse bedeutet dies, dass sowohl die Bypassklappe als auch die Abgasklappe die Drehbewegung um die gleiche Rotationsachse ausführen. Die Rotationsachse sitzt besonders bevorzugt auf der Mitte des Abgasrohres selber. Aufgrund des konzentrischen Versatzes des Bypassrohres gegenüber einer konzentrischen Mitte des Abgasrohres ergibt sich eine ungleiche Verteilung der Querspantfläche beider Abgasklappen, was sich wiederum vorteilig auf die Anströmung der Klappen im geschlossenen Zustand auswirkt, wodurch die Stellkräfte zum Öffnen der Klappen verringert werden.

Weiterhin sind beide Klappen auf der gleichen Welle gelagert, so dass bei Drehung der Welle sich beispielsweise die Abgasklappe schließt und gleichzeitig die Bypassklappe öffnet oder umgekehrt. Hierdurch ist nur ein Stellaktuator notwendig um beide Klappen gleichzeitig zu bedienen. Die Klappen selber, also sowohl die Abgasklappe als auch die Bypassklappe können dabei auf die Welle aufgeschraubt sein oder aber auch zusätzlich in einen Schlitz der Welle eingeführt werden und dort kraftschlüssig beispielsweise über eine Klemmung lagefixiert werden oder aber durch zusätzliche formschlüssige Fixierung beispielsweise durch ein Verschrauben lagefixiert werden.

Im Rahmen der Erfindung ist es ebenfalls möglich die Klappen an der Welle zu verkleben oder in sonstiger Weise zu fixieren. Zur Montage der Abgasklappenanordnung wird zunächst vorzugsweise die Welle durch entsprechende Öffnungen in der Abgasleitung und dem Bypassrohr eingeschoben und anschließend die Klappen an der Welle montiert. Im Rahmen der Erfindung ist es jedoch auch möglich die Welle in Längsrichtung zweiteilig auszubilden, so dass zunächst die Klappen in die Abgasleitung oder aber das Bypassrohr eingesetzt werden und dann von beiden Seiten die Welle eingeschoben wird und die Klappen formschlüssig in einem Aufnahmeschlitz aufgenommen werden.

In einer weiteren bevorzugten Ausführungsvariante wird die Welle derart ausgebildet, dass die Bypassklappe und die Abgasklappe unabhängig voneinander drehbar sind. Beispielweise ist die Welle ebenfalls zweiteilig aufgeteilt, wobei diese aus einer inneren und einer äußeren Welle ausgebildet ist und somit über die innere Welle die Bypassklappe ansteuerbar ist und über die äußere Welle die Abgasklappe ansteuerbar ist. Hierdurch ist es möglich beide Strömungskanäle unabhängig voneinander zu betätigen. In diesem Fall ist es möglich die Bypassklappe und die Abgasklappe um die Rotationsachse beispielsweise in gleiche Richtung drehbar auszugestalten oder aber auch in verschiedene Richtungen drehbar zu lagern.

Weiterhin besonders bevorzugt sind die Bypassklappe und/oder die Abgasklappe über einen Aktuator ansteuerbar, insbesondere über einen elektrischen Stellaktuator. Im Falle der Lagerung von Abgasklappe und Bypassklappe auf der gleichen Welle ist es möglich beide Klappen durch Betätigung mit nur einem Stellaktuator gleichzeitig zu verstellen. Beispielsweise kann dieser Stellaktuator als Linearantieb über eine Koppelstange mit der Welle gekoppelt sein. Im Rahmen der Erfindung ist es jedoch auch möglich insbesondere bei Verwendung eines rein elektrischen Stellaktuators ein Elektromotor direkt an die Welle zu koppeln und durch Drehbewegung des Elektromotors entsprechend eine Drehbewegung der Klappe auszuführen. Auch dieses bietet insbesondere wiederum den Vorteil, dass die erfindungsgemäße Abgasklappenanordnung ein sehr kompaktes Bauraumabmaß aufweist.

Im Rahmen der Erfindung ist es jedoch auch bei einer zweiteiligen Welle und damit verbundene unabhängige Ansteuerbarkeit beider Klappen voneinander möglich zwei Aktuatoren zu verwenden, so dass jeder Aktuator zur Ansteuerung einer Klappe verwendet wird.

Weiterhin besonders bevorzugt weist die Abgasklappe einen Stufenversatz auf, insbesondere ist ein unterer Teil der Abgasklappe gegenüber einem oberen Teil der Abgasklappe versetzt angeordnet, besonders bevorzugt parallel versetzt. Der Stufenversatz ist insbesondere im Bereich der Welle ausgebildet, wobei besonders bevorzugt der obere Teil der Abgasklappe direkt an der Welle angeordnet ist und der untere Teil der Abgasklappe über den Stufenversatz mit einem Versatz zu der Welle angeordnet ist. Hierdurch ergibt sich der Vorteil, dass bei Ausführung der Schwenkbewegung der mit dem Stufenversatz versetzte, insbesondere parallel versetzte untere Teil der Abgasklappe derart an eine Unterseite des Bypassrohr schwenkbar ist, dass die Klappe im Wesentlichen vollständig parallel zur Strömungsrichtung gelagert werden kann und hierdurch eine maximale Querschnittsfläche der Abgasleitung zur Durchströmung mit Abgas freigegeben wird. Ferner ist die Ausnehmung zur Durchführung des Bypassrohres durch die Abgaskappe im Bereich des Stufenversatzes angeordnet, so dass die Bypassklappe um ein Ende des Bypassrohres schwenkbar ist und von einer geschlossen Stellung in der nahezu die gesamte, vorzugsweise vollständig zur Verfügung stehende Strömungsfläche der Abgasleitung geschlossen ist und in einer Öffnungsstellung ein maximaler Durchtritt durch die Abgasleitung freigegeben wird.

Weiterhin besonders bevorzugt weist der untere Teil der Abgasklappe gegenüber dem oberen Teil der Abgasklappe eine größere Querschnittsfläche auf. Besonders bevorzugt wird der untere Teil der Abgasklappe bei Ausführung der Drehbewegung um die Rotationsachse in Strömungsrichtung des Abgases geschwenkt und der obere Teil der Abgasklappe entgegen der Strömungsrichtung des Abgases. Dadurch dass der untere Teil der Abgasklappe eine größere Querschnittsfläche, mithin Querspantfläche aufweist, trifft hier mehr strömendes Abgas auf die Querschnittsfläche, als im oberen Teil. Hierdurch ist der untere Teil mit einer größeren Kraft beaufschlagt, als der obere Teil, wodurch sich die Abgasklappe in Strömungsrichtung des Abgases leichter öffnen lässt. Sofern das Verhältnis der unterschiedlichen Größenverteilung vom oberen Teil zum unteren Teil der Abgasklappe im Rahmen gehalten wird, ist es jedoch auch möglich die Schließbewegung besonders einfach auszuführen. Hierdurch ergibt sich der Vorteil, dass der Aktuator nur geringe Stellkräfte benötigt um die Drehbewegung der Abgasklappe durchzuführen.

In einer weiteren bevorzugten Ausführungsvariante ist die Bypassklappe ebenfalls asymmetrisch unterteilt, so dass der obere Teil der Bypassklappe gegenüber dem unteren Teil Der Bypassklappe eine größere Querschnittsfläche aufweist. Bei Öffnen der Bypassklappe wird insbesondere der obere Teil in Richtung der Abgasströmungsrichtung geschwenkt, wohingegen der untere Teil entgegen der Abgasströmungsrichtung geschwenkt wird. Insbesondere im Zusammenspiel mit der Abgasklappe und ganz besonders bevorzugt bei Verschwenken beider Klappen in Ausführung einer Drehbewegung ist somit der untere Teil der Abgasklappe und der obere Teil der Bypassklappe jeweils mit einer größeren Querschnittsfläche beaufschlagt, wodurch sich die Stellkräfte bei strömendem Abgas derart neutralisieren, dass nur eine geringe Stellkraft zur Schwenkbewegung der Gesamtklappe mithin beider Klappen gleichzeitig notwendig ist.

Weiterhin bevorzugt weist der untere Abschnitt des Abgaskanals eine Schwenkausnehmung, insbesondere eine Ausbauchung auf, wobei bei Ausführung der Drehbewegung der Abgasklappe der untere Teil der Abgasklappe durch die Schwenkausnehmung schwenkbar ist. Die Schwenkausnehmung ist insbesondere in Form einer Ausbauchung gegenüber einer inneren Mantelfläche der Abgasleitung in radialer Richtung nach außen überstehend ausgebildet. Die aufgrund des Stufenversatzes in radialer Richtung sich erstreckende Schwenkbewegung des unteren Teils der Abgasklappe wird durch die Schwenkausnehmung ausgeglichen, so dass es zu keinem Verkanten der Abgasklappenanordnung kommt.

Weiterhin bevorzugt ist der Bypasskanal gegenüber der Bypassklappe überstehend ausgebildet, wobei bevorzugt ein oberer Abschnitt des Bypasskanals gegenüber einem unteren Abschnitt geringer überstehend ausgebildet ist. Hierdurch ist es möglich zum einen eine Abdichtung auch bei nur um wenige Grad verschwenkter Abgasklappe noch zu gewährleisten, so dass die Abgasleitung im Wesentlichen nicht strömungsleitend angeordnet ist. Ferner ist der Verlauf zwischen oberem geringer überstehenden Abschnitt des Bypasskanals gegenüber unterem Abschnitt des Bypasskanals, der gegenüber dem oberen Abschnitt weiter überstehend ausgebildet ist und des Stufenversatzes möglich, die Abgasklappe abzudichten. Der Stufenversatz zeigt somit ausgehend von der drehbaren Welle in Richtung zur Abgasströmung und auch zum überstehenden unteren Abschnitt, wodurch bei geschlossener Abgasklappe die Ausnehmung der Abgasklappe an dem unteren Abschnitt des Bypassrohres anliegend angeordnet ist.

Ferner ist bevorzugt der obere Abschnitt des Bypasskanals an einer Außenseite abflachend ausgebildet, so dass bei Ausführung der Schwenkbewegung der Abgasklappe diese über die abgeflachte Außenseite gleiten kann. Ferner ist besonders bevorzugt eine Stirnseite der Bypassöffnung des Bypasskanals von oben nach unten verlaufend zunehmend gegenüber der Bypassklappe überstehend ausgebildet, wobei der Verlauf insbesondere progressiv zunehmend ausgebildet ist.

Weiterhin besonders bevorzugt ist die Bypassklappe und/oder die Abgasklappe selbst als runde, elliptische und/oder rechteckige Klappe ausgebildet. Dies bedeutet, dass die äußere Kontur der jeweiligen Klappe bevorzugt rund, elliptisch, oder aber auch rechteckig ausgebildet ist. Abhängig ist dies von den zu wählenden Querschnitten der strömungsleitenden Kanäle. Im Rahmen der Erfindung ist es auch möglich eine jeweils mehreckige Ausführung beispielsweise ein Fünf- oder aber auch Sechseck oder anderweitiges Vieleck oder aber auch Mischformen der zuvor benannten Klappenkonturen zu wählen.

Weiterhin bevorzugt ist die Welle an beiden Seiten gelagert, wobei insbesondere die Lager außerhalb des Abgasrohres selber angeordnet sind, so dass sie nicht der direkten Temperatureinwirkung des strömenden Abgases ausgesetzt sind. Ebenfalls sind die Lagerungen nicht, durch im Abgas enthaltene Schmutz- oder Rußpartikeln, einer Verschmutzung ausgesetzt. Die Lager selbst sind besonders bevorzugt als Gleitlager und/oder Wälzlager, ganz besonders bevorzugt als keramisches Lager ausgebildet.

Weiterhin bevorzugt ist zwischen den Klappen und den die Klappen jeweils umgebenden Innenmantelflächen ein Dehnungsspalt vorgesehen, so dass bei unterschiedlichen thermischen Ausdehnungen von Klappe zu Rohr oder aber Innenmantelfläche ein Verklemmen der Klappen vermieden wird. Weiterhin besonders bevorzugt sind zur Steigerung der Dichtigkeit der Abgasklappenanordnung Dichtkanten vorgesehen, so dass die Abgasklappe und/oder die Bypassklappe an einer jeweiligen Dichtkante zur Anlage kommen und den jeweiligen Strömungskanal im Wesentlichen gasdicht abschließen.

Weiterhin besonders bevorzugt sind entweder die Dichtkanten in dem Kanal selber und/oder die Dichtkanten an der jeweiligen Klappe angeordnet. Die Dichtkanten sind besonders bevorzugt in Abgasströmungsrichtung derart angeordnet, dass sie eine radiale Ausdehnung der Klappen zu der Innenmantelfläche des jeweiligen Rohres kompensieren, ohne dabei Nachteile bei der Gasdichtigkeit zu verursachen. Die Dichtkanten sind dabei besonders bevorzugt aus einem metallischen oder aber keramischen Werkstoff hergestellt, so dass sie den zu erwartenden Abgastemperaturen standhalten und gleichzeitig eine gasdichte Funktion ausbilden. Besonders bevorzugt sind die Dichtkanten derart ausgebildet, dass ein Festkleben oder Festbacken der Klappen an den Dichtkanten vermieden wird. Insbesondere können die Dichtkanten dazu auch beschichtet sein.

Die vorliegende Erfindung sieht weiterhin einen Abgaswärmetauscher vor, wobei der Abgaswärmetauscher in einem Abgasstrang eines Kraftfahrzeuges angeordnet wird. Der Abgaswärmetauscher ist hierzu als geschweißtes Blechbauteil, insbesondere als rohrförmiges Bauteil ausgebildet und weist mindestens zwei rohrförmig ineinander verschachtelte Kanäle auf, wobei er sich erfindungsgemäß dadurch auszeichnet, dass er eine Abgasklappenanordnung mit mindestens einem der zuvor beschriebenen Merkmale besitzt.

Besonders bevorzugt ist der Abgaswärmetauscher aus einem metallischen Werkstoff, insbesondere aus einem Edelstahl ausgebildet, so dass er resistente Eigenschaften gegen das mitunter hochkorrosive Abgas aufweist. Der erfindungsgemäße Abgaswärmetauscher ist weiterhin insbesondere rohrförmig ausgebildet, wobei ein außenliegender Abgaskanal einen innenliegenden rohrförmigen Bypasskanal aufweist und die beiden Kanäle durch die erfindungsgemäße Abgasklappe jeweils unterschiedlich oder aber gleichzeitig zu Teilströmen anströmbar sind. In dem Abgaskanal selbst ist besonders bevorzugt ein Spiralwärmetauscher angeordnet, durch den ein Medium strömbar bzw. leitbar ist, dass durch das Abgas, welches durch den Abgaskanal strömt erwärmbar ist.

Insbesondere ist der erfindungsgemäße Abgaswärmetauscher derart als Schweißbauteil ausgebildet, dass sich die Abgasklappenanordnung in einer Schweißhülse befindet, die in Längsrichtung in einer Außenmantelfläche des Abgaswärmetauschers eingegliedert ist. Hierdurch erfolgt eine besonders kostengünstige Produktion des erfindungsgemäßen Abgaswärmetauschers, wobei zugleich aufgrund der rohrförmig ineinander verschachtelten zwei Kanäle geringe Außenabmessungen und auch gleichzeitig geringer Materialeinsatz erreicht werden.

Weiterhin bevorzugt ist das Bypassrohr über eine Stützwand in dem Abgasrohr gelagert. Die Stützwand stellt somit einen konstanten Abstand zwischen Außenmantelfläche des Bypassrohres und Innenmantelfläche des Abgasrohrs ein, wobei die Stützwand bevorzugt nur an einer der beiden zuvor genannten Flächen lagefixiert bzw. fest gekoppelt ist und gegenüber der anderen Fläche gleitend gelagert ist. Hierdurch können Längenänderungen von Bypassrohr und/oder Abgasrohr derart kompensiert werden, dass ein Abstand in Radialrichtung durch die Stützwand gehalten ist, jedoch in Axialrichtung sich die Längen der Rohre relativ zueinander ändern können, ohne dass der Abgaswärmetauscher aufgrund eines Verzuges in einen Spannungszustand überführt wird.

Weitere Vorteile, Merkmale, Eigenschaften und Aspekte der vorliegenden Erfindung sind Bestandteil der nachfolgenden Beschreibung. Die Ausführungsvarianten sind mit schematischen Figuren dargestellt. Diese dienen dem einfachen Verständnis der Erfindung. Es zeigen:
- Figur 1: eine perspektivische Ansicht einer Abgasklappenanordnung mit geschlossener Abgasklappe und geöffneter Bypassklappe,
- Figur 2: eine perspektivische Ansicht aus Figur 1 mit teilgeöffneter Abgasklappe und teilgeöffneter Bypassklappe,
- Figur 3: die gleiche perspektivische Ansicht mit geöffneter Abgasklappe und geschlossener Bypassklappe,
- Figur 4: eine erfindungsgemäße Abgasklappe in Detailansicht,
- Figur 5: eine perspektivische Ansicht des Abgasrohres und des Bypassrohres ohne Abgasklappe,
- Figur 6a: eine Querschnittsansicht durch die erfindungsgemäße Abgas-
- und b: klappenanordnung mit geöffneter und geschlossener Abgasklappe sowie geschlossener und geöffneter Bypassklappe,
- Figur 7: einen erfindungsgemäßen Abgaswärmetauscher in perspektivischer Teilansicht,
- Figur 8: einen erfindungsgemäßen Abgaswärmetauscher in perspektivischer Schnittansicht und
- Figur 9: einen erfindungsgemäßen Abgaswärmetauscher in Darstellung ohne Außenmantelfläche.

In den Figuren werden für gleiche oder ähnliche Bauteile dieselben Bezugszeichen verwendet, auch wenn eine wiederholte Beschreibung aus Vereinfachungsgründen entfällt.

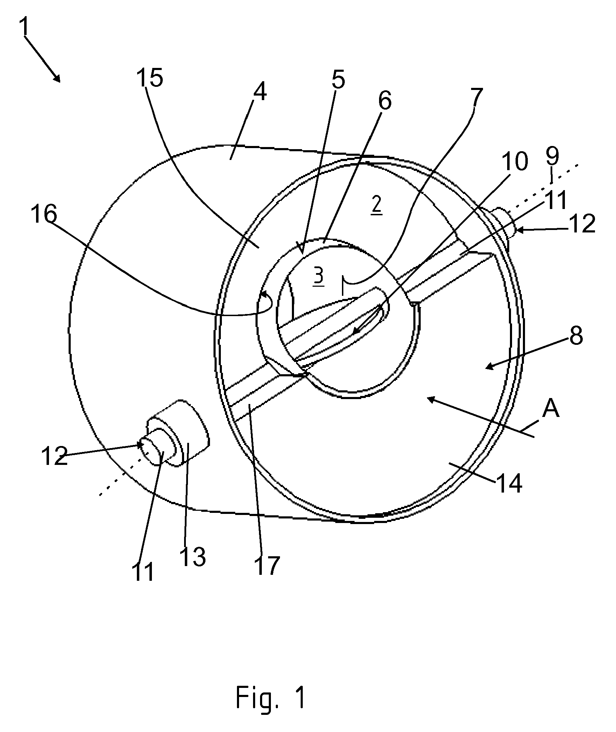

Figur 1 zeigt eine erfindungsgemäße Abgasklappenanordnung 1, wobei die Abgasklappenanordnung 1 ausgebildet ist aus einem außenliegenden Abgaskanal 2 und einem innenliegenden Bypasskanal 3. Der Abgaskanal 2 selbst wird durch ein außenliegendes Abgasrohr 4 begrenzt sowie durch die Außenmantelfläche 5 eines innenliegenden Bypassrohres 6. Der Bypasskanal 3 selbst liegt in dem Bypassrohr 6 und wird durch die Innenmantelfläche 7 des Bypassrohres 6 begrenzt. In dem Abgaskanal 2 ist eine Abgasklappe 8 um eine Rotationsachse 9 drehbar angeordnet, wobei in dem Bypasskanal 3 um die gleiche Rotationsachse 9 eine Bypassklappe 10 drehbar angeordnet ist.

Beide Klappen 8, 10 sind auf einer Welle 11 angeordnet, wobei die Welle 11 an ihren Enden 12 in jeweiligen Lagern 13 drehbar gelagert ist. Die Lager 13 sind dabei außerhalb des Abgasrohres 4 angeordnet, so dass sie nicht den thermischen oder aber hochkorrosiven Belastungen des durch den Abgaskanal 2 strömenden Abgases ausgesetzt sind.

In der in Figur 1 dargestellten Ausführungsvariante ist die Abgasklappe 8 im geschlossenen Zustand dargestellt und die Bypassklappe 10 in geöffnetem Zustand. Ein unterer Teil 14 der Abgasklappe 8 ist dabei in seiner Querschnittsfläche größer ausgebildet, als ein oberer Teil 15 der Abgasklappe 8. Die Abgasklappe 8 weist ferner eine Ausnehmung 16 auf, die die Außenmantelfläche 5 des Bypassrohres 6 nahezu vollständig umschließt. Ferner ist in der Abgasklappe 8 ein Stufenversatz 17 ausgebildet, so dass der untere Teil 14 in Abgasströmungsrichtung A versetzt gegenüber dem oberen Teil 15 der Abgasklappe 8 versetzt ausgebildet ist. Oberer und unterer Teil 14, 15 der Abgasklappe 8 verlaufen in der hier dargestellten Ausführungsvariante parallel.

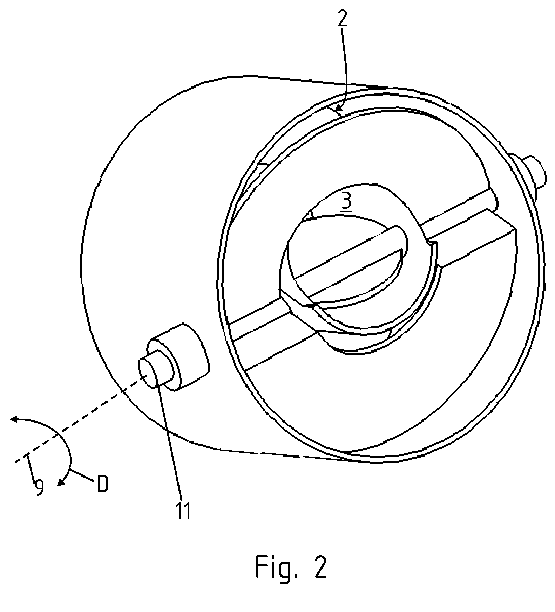

In Figur 2 wird um die Rotationsachse 9 eine Drehbewegung D der Welle 11 ausgeführt, so dass sich beide Klappen gleichzeitig drehen. Dabei sind hier beide Klappen derart geschwenkt, dass sowohl der Abgaskanal 2 teilgeöffnet ist, als auch der Bypasskanal 3 teilgeöffnet ist.

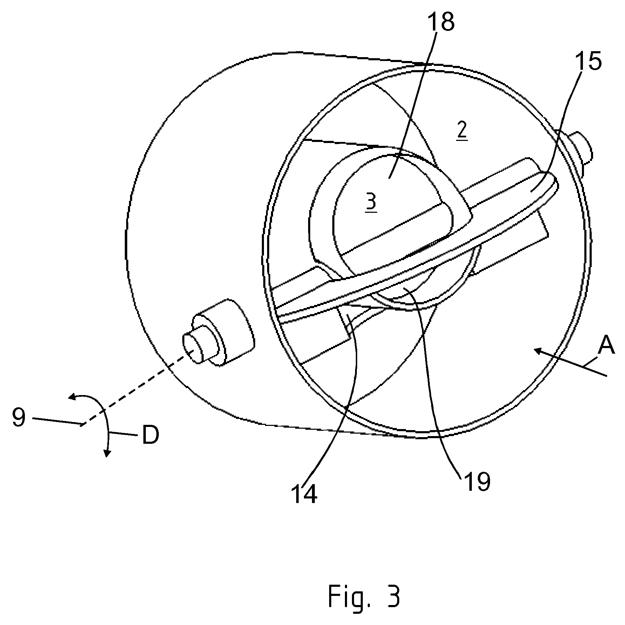

Figur 3 zeigt die gleiche Anordnung nach Abschluss der Drehbewegung D, so dass hier dargestellt der Bypasskanal 3 vollständig geschlossen ist und der Abgaskanal 2 vollständig geöffnet ist. Der obere Teil 18 der Bypassklappe 10 ist dabei bezogen auf die Abgasströmungsrichtung in Richtung zur Abgasströmungsrichtung geschwenkt und der untere Teil 14 der Abgasklappe 8 ist in Strömungsrichtung des Abgases geschwenkt. Bei Ausführung der Schließbewegung schwenkt ein oberer Teil 18 der Bypassklappe 10 entgegengesetzt zur Strömungsrichtung des Abgases und ein unterer Teil 19 der Bypassklappe 10 schwenkt in Strömungsrichtung des Abgases.

Auch bei der Bypassklappe 10 ist der obere Teil 18 derart größer ausgebildet, dass sich ein asymmetrisches Verhältnis zwischen oberem und unterem Teil 18, 19 der Bypassklappe 10 ergibt. Mithin sind der obere Teil 18 der Bypassklappe 10 größer ausgebildet und der untere Teil 14 der Abgasklappe 8. Bei einer Schwenkbewegung relativieren sich somit, insbesondere neutralisieren sich die entstehenden Kräfte, die durch das auf die jeweiligen Teile der Abgas- oder Bypassklappe 8, 10 treffende Abgasströmung verursacht werden.

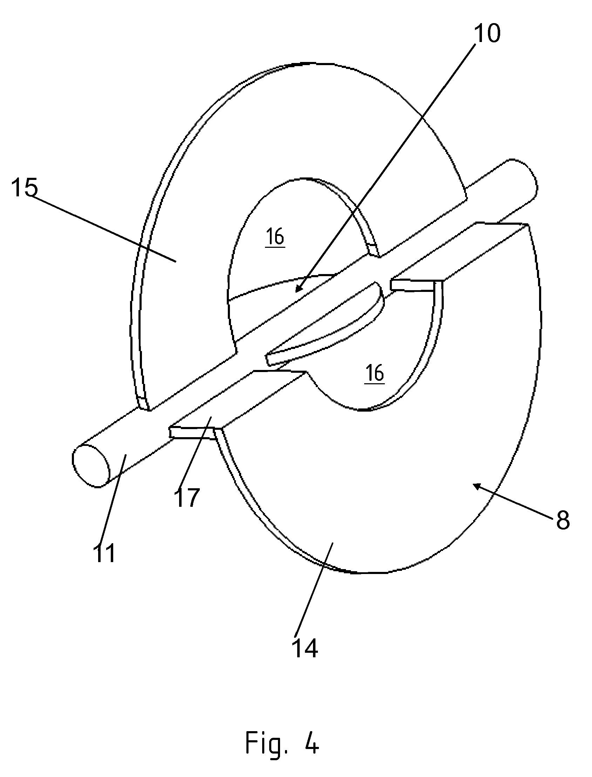

Figur 4 zeigt weiterhin die erfindungsgemäße Abgasklappe 8 mit integrierter Bypassklappe 10 auf einer Welle 11, wobei die Bypassklappe 10 durch einen nicht näher dargestellten Schlitz durch die Welle 11 geschoben wird. Die Abgasklappe 8 ist bevorzugt zweiteilig ausgebildet, so dass der obere Teil 15 der Abgasklappe auf einen ebenfalls nicht näher dargestellten Schlitz der Welle 11 aufgesetzt ist und der untere Teil 14 der Abgasklappe 8 über den Stufenversatz 17 mit der Welle 11 gekoppelt ist. Ferner dargestellt ist die Ausnehmung 16 in der Abgasklappe 8, in der das in Figur 4 nicht näher dargestellte Bypassrohr 6 angeordnet ist. Die Ausnehmung 16 ist zweiteilig ausgebildet, wobei sich ein Teil der Ausnehmung 16 im oberen Teil 15 der Abgasklappe 8 und ein Teil der Ausnehmung 16 in dem unteren Teil 14 der Abgasklappe 8 sowie dem Stufenversatz 17 ausgebildet ist.

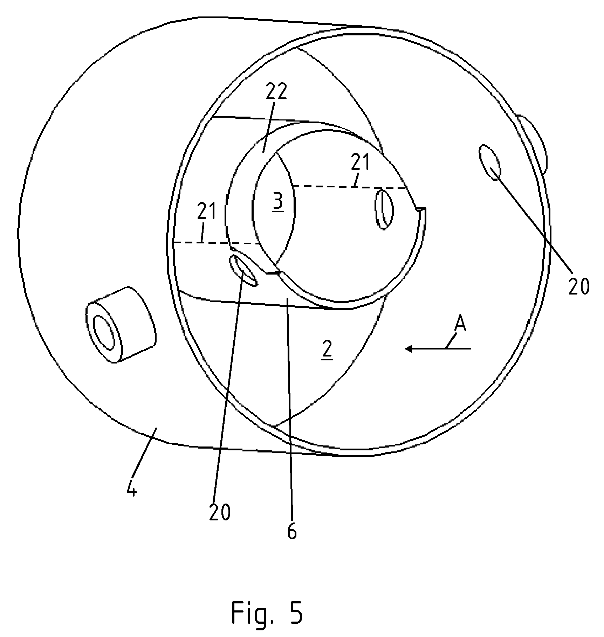

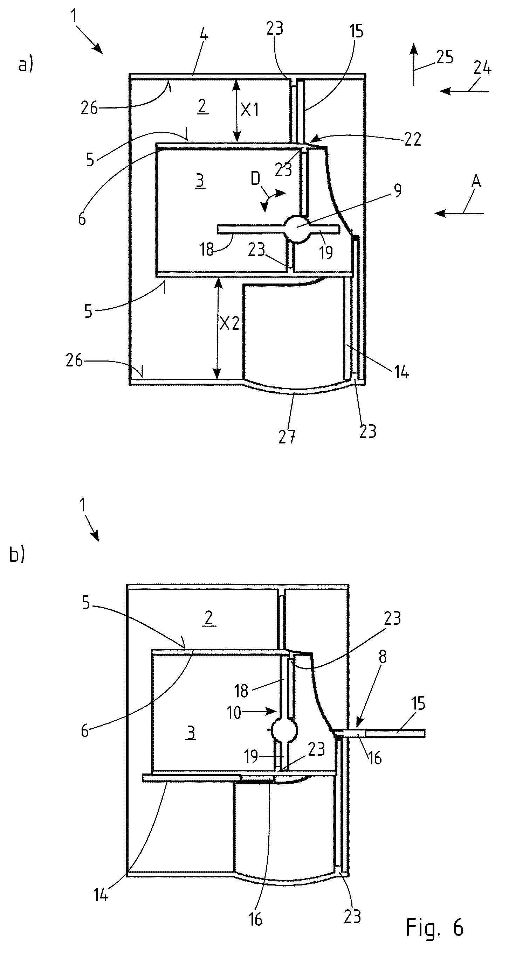

Figur 5 zeigt die erfindungsgemäße Anordnung ohne Abgasklappe 8, ohne Bypassklappe 10 und ohne Welle 11, wobei hier das Abgasrohr 4 sowie das Bypassrohr 6 ineinander angeordnet sind. Erkennbar ist, dass das Bypassrohr 6 konzentrisch nach oben versetzt in dem Abgasrohr 4 angeordnet ist. Insbesondere ersichtlich ist dies durch die Montageöffnungen 20 zur Durchführung der nicht näher dargestellten Welle 11, die gegenüber einem Mittenquerschnittsverlauf 21 des Bypassrohres 6 nach unten versetzt sind. Ferner erkennbar ist eine in den Figuren 6a und b näher erläuterte Abflachung 22 des Bypassrohres 6 in einem oberen Endbereich. Hierdurch ist es möglich, dass der obere Teil 15 der Abgasklappe 8 mit der Ausnehmung 16 über das Ende des Bypassrohres 6 in entgegengesetzter Richtung der Abgasströmungsrichtung A geschwenkt wird.

Figur 6a und 6b zeigen die erfindungsgemäße Abgasklappenanordnung 1 jeweils in einer Querschnittsansicht. In Figur 6a ist die Abgasklappe 8 hier dargestellt durch den unteren Teil 14 sowie den oberen Teil 15 der Abgasklappe 8 geschlossen, so dass in die Abgasklappenanordnung 1 einströmendes Abgas ausschließlich durch den geöffneten Bypasskanal 3 strömen kann, nicht jedoch durch den Abgaskanal 2. Ferner dargestellt sind Dichtkanten 23, gegenüber denen der obere Teil 15 und der untere Teil 14 der Abgasklappe 8 zur Anlage kommen. Der obere Teil 15 und der untere Teil 14 der Abgasklappen 8 liegen in axialer Richtung 24 gegenüber den Dichtkanten 23 an, so dass in radialer Richtung 25 ein Spiel verbleibt, um unterschiedliche radiale der Abgasklappe 8 gegenüber der Innenmantelfläche 26 des Abgasrohres 4 kompensiert werden. Ferner ist die bereits zuvor angesprochene Abflachung 22 am Ende des Bypassrohres 6 dargestellt, wobei bei Ausführung der Drehbewegung des oberen Teils 15 der Abgasklappe 8 diese über die Abflachung 22 geschwenkt wird.

Ferner ist an der unteren Seite des Abgasrohres 4 eine Ausbauchung 27 dargestellt, wobei ebenfalls bei Ausführung der Drehbewegung der untere Teil 14 der Abgasklappe 8 durch die Ausbauchung 27 geschwenkt wird.

Ebenfalls sind Dichtkanten 23 in Form von axialen Anschlagflächen für den oberen und den unteren Teil 18, 19 der Bypassklappe 10 angeordnet, so dass bei in Figur 6b dargestellter geschlossener Bypassklappe 10 der obere Teil der Bypassklappe 10 an einer oberen Dichtkante 23 zur Anlage kommt und der untere Teil 19 der Bypassklappe 10 an einer unteren Dichtkante 23 zur Anlage kommt. Die Bypassklappe 10 ist dabei vollständig geschlossen, wohingegen die Abgasklappe 8 vollständig geöffnet ist. Ebenfalls zu erkennen ist der obere Teil 15 und der untere Teil 14 der Ausnehmung 16 in der Abgasklappe 8, der im geschlossenen Zustand die Außenmantelfläche 5 des Bypassrohres 6 aufnimmt. Weiterhin gut zu erkennen ist in Figur 6a der konzentrische Versatz des Bypassrohres 6 innerhalb des Abgasrohres 4, wodurch sich ein kleinerer Abstand x1 von Außenmantelfläche 5 des Bypassrohres 6 zur Innenmantelfläche 26 des Abgasrohres 4 ergibt, gegenüber dem Abstand x2 ebenfalls von Außenmantelfläche 5 des Bypassrohres 6 zur Innenmantelfläche 26 des Abgasrohres 4. Die Rotationsachse 9 selbst ist jedoch mittig in dem Abgasrohr 4 angeordnet und außermittig in dem Bypassrohr 6. Hierdurch ergeben sich die verschiedenen Höhenverhältnisse zwischen unterem Teil 14, 19 und oberen Teil 15, 18 von Abgasklappe 8 und Bypassklappe 10.

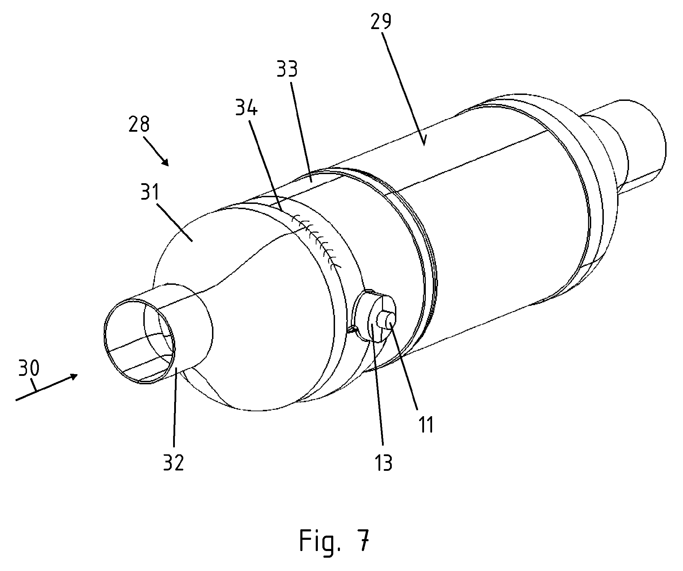

Figur 7 zeigt einen erfindungsgemäßen Abgaswärmetauscher 28 in einer perspektivischen Ansicht. Der Abgaswärmetauscher 28 weist dabei eine Außenmantelfläche 29 auf, wobei dieser in seiner Längsrichtung 30 aus verschiedenen einzelnen Baugruppen miteinander verschweißt ist. So weist er eingangs einen trichterförmigen Stutzen 31 auf, der sich in Längsrichtung 30 beginnend von einer Koppelstelle 32 mit einem nicht näher dargestellten Abgasstrang, radial aufweitet. An dem trichterförmigen Stutzen 31 ist eine Schweißhülse 33 gekoppelt, wobei die Schweißhülse 33 die erfindungsgemäße Abgasklappe aufweist bzw. diese in der Schweißhülse 33 nicht näher dargestellt angeordnet ist. Zu erkennen sind die außenliegenden Lager 13 sowie die Welle 11, um die die Abgasklappe drehbar gelagert ist. Die einzelnen Baugruppen, hier dargestellt die Stutzen 31 und die Schweißhülse 33 sind über eine angedeutete thermische Fügenaht 34 radial umlaufend miteinander verschweißt.

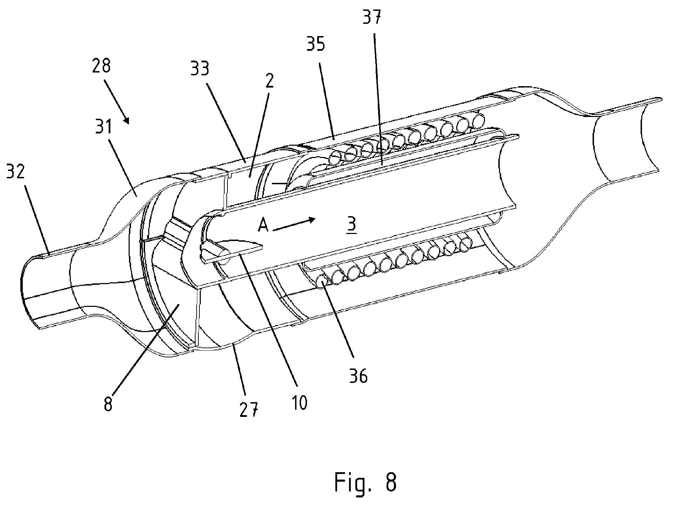

In Figur 8 dargestellt ist der erfindungsgemäße Abgaswärmetauscher 28 in einer perspektivischen Darstellung. Zu erkennen ist wiederrum die Koppelstelle 32 zur Koppelung eines nicht näher dargestellten Abgasrohres und der sich von der Koppelstelle 32 aus erstreckende radial aufweitende Stutzen 31. An diesem ist eine Schweißhülse 33 gekoppelt, die im Wesentlichen dem Aufbau gemäß dem in Figur 6a und b dargestellten Aufbau gleicht. So ist insbesondere die Ausbauchung 27 an der Unterseite der Schweißhülse 33 dargestellt.

Im weiteren Verlauf dargestellt ist das Hüllrohr 35 des außenliegenden Abgaskanals, wobei in dem Abgaskanal 2 rohrförmig eingeschlossen der Bypasskanal 3 verläuft. Die Bypassklappe 10 ist in der in Figur 8 dargestellten Variante auf offen gestellt, so dass Abgas in Abgasströmungsrichtung A durch den Bypasskanal 3 verläuft. Hierzu ist die Abgasklappe 8 in geschlossen Stellung dargestellt.

In dem Abgaskanal 2 selbst ist eine Spiralleitung 36 angeordnet, so dass im Falle von Durchströmen von Abgas durch den Abgaskanal 2 ein durch die Spiralleitung 36 strömendes nicht näher dargestelltes Medium oder Fluid im Kreuzstrom durch das Abgas erwärmbar ist. Ferner ist die Spiralleitung 36 das Bypassrohr 6 radial umgreifend unter Eingliederung eines Isolationsraumes 37 angeordnet. Der Isolationsraum 37 dient bei Umgehung des Abgaswärmetauschers 28 durch den Bypass einer Unterbindung eines Wärmeüberganges von der Bypassleitung an die Spiralleitung 36. Vorzugsweise ist in dem Isolationsraum 37 eine Luftschicht angeordnet, im Rahmen der Erfindung können hier jedoch auch Isolationsmaterialien oder aber Isolationsgase insbesondere Isolierwerkstoffe angeordnet sein.

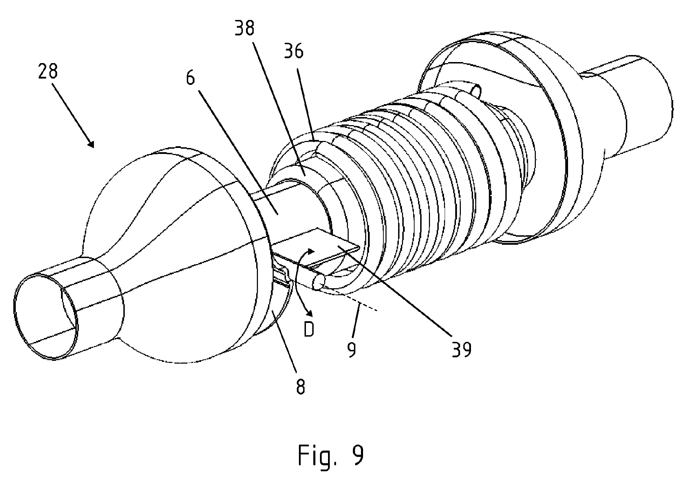

In Figur 9 ist eine Darstellung des erfindungsgemäßen Abgaswärmetauschers 28 gezeigt, ohne Schweißhülse und ohne Hüllrohr. Hier ist gut zu erkennen, dass ein Isolierrohr 38 um das Bypassrohr 6 angeordnet ist, so dass eine Isolierung zwischen Bypassrohr 6 und Spiralleitung 36 ausgebildet ist. Ferner ist eine Stützwand 39 bzw. eine Leitfinne in dem als frei dargestellten Abgaskanal angeordnet, wobei die zum Teil sichtbare Abgasklappe 8 bei Ausführung der Drehbewegung D um die Rotationsachse 9 an der Stützwand 39 zur Auflage kommt.

### Bezugszeichen:

- 1 -: Abgasklappenanordnung
- 2 -: Abgaskanal
- 3 -: Bypasskanal
- 4 -: Abgasrohr
- 5 -: Außenmantelfläche zu 6
- 6 -: Bypassrohr
- 7 -: Innenmantelfläche zu 6
- 8 -: Abgasklappe
- 9 -: Rotationsachse
- 10 -: Bypassklappe
- 11 -: Welle
- 12 -: Ende zu 11
- 13 -: Lager
- 14 -: unterer Teil zu 8
- 15 -: oberer Teil zu 8
- 16 -: Ausnehmung
- 17 -: Stufenversatz
- 18 -: oberer Teil zu 10
- 19 -: unterer Teil zu 10
- 20 -: Montageöffnung
- 21 -: Mittenquerschnittsverlauf zu 6
- 22 -: Abflachung zu 6
- 23 -: Dichtkante
- 24 -: axiale Richtung
- 25 -: radiale Richtung
- 26 -: Innenmantelfläche zu 4
- 27 -: Ausbauchung zu 4
- 28 -: Abgaswärmetauscher
- 29 -: Außenmantelfläche
- 30 -: Längsrichtung zu 28
- 31 -: Stutzen
- 32 -: Koppelstelle
- 33 -: Schweißhülse
- 34 -: Fügenaht
- 35 -: Hüllrohr
- 36 -: Spiralleitung
- 37 -: Isolationsraum
- 38 -: Isolierrohr
- 39 -: Stützwand

- D -: Drehbewegung
- A -: Abgasströmungsrichtung
- x -: Abstand
- x1 -: Abstand
- x2 -: Abstand

## Patentansprüche

1. Abgasklappenanordnung (1) für einen Abgasstrang eines Kraftfahrzeuges, wobei die Abgasklappenanordnung (1) einen durch ein Abgasrohr (4) ausgebildeten Abgaskanal (2) aufweist, in dem konzentrisch innenliegend ein durch ein Bypassrohr (6) ausgebildeter Bypasskanal (3) angeordnet ist, wobei das Bypassrohr (6) durch eine drehbare Bypassklappe (10) verschließbar ist, **dadurch gekennzeichnet, dass** das Abgasrohr (4) durch eine drehbare Abgasklappe (8) verschließbar ist, wobei die Abgasklappe (8) eine Ausnehmung (16) aufweist, in der das Bypassrohr (6) angeordnet ist und die Bypassklappe (10) und die Abgasklappe (8) um eine Rotationsachse (9) auf der gleichen Welle (11) drehbar gelagert sind.

2. Abgasklappenanordnung nach Anspruch 1, **dadurch gekennzeichnet, dass** die Abgasklappe (8) und/oder die Bypassklappe (10) als drehbare Butterflyklappe ausgebildet sind.

3. Abgasklappenanordnung nach einem der vorhergehenden Ansprüche, **dadurch gekennzeichnet, dass** die Bypassklappe (10) und/oder die Abgasklappe (8) über einen Aktuator ansteuerbar sind, insbesondere über einen elektrischen Stellaktuator.

4. Abgasklappenanordnung nach einem der vorhergehenden Ansprüche, **dadurch gekennzeichnet, dass** die Abgasklappe (8) einen Stufenversatz (17) aufweist, insbesondere ist ein unterer Teil (14) der Abgasklappe (8) gegenüber einem oberen Teil (15) der Abgasklappe (8) versetzt angeordnet ist, insbesondere parallelversetzt.

5. Abgasklappenanordnung nach Anspruch 4, **dadurch gekennzeichnet, dass** der untere Teil (14) der Abgasklappe (8) gegenüber dem oberen Teil (15) eine größere Querschnittsfläche aufweist.

6. Abgasklappenanordnung nach Anspruch 4 oder 5, **dadurch gekennzeichnet, dass** der untere Teil (14) der Abgasklappe (8) bei Ausführung der Drehbewegung (D) um die Rotationsachse in Strömungsrichtung (A) des Abgases schwenkbar ist, wobei der obere Teil (15) der Abgasklappe entgegen der Strömungsrichtung (A) des Abgases schwenkbar ist und/oder der obere Teil (19) der Bypassklappe (10) bei Ausführung der Drehbewegung (D) um die Rotationsachse (9) in Strömungsrichtung (A) des Abgases schwenkbar ist, wobei der untere Teil (19) der Bypassklappe (10) entgegen der Strömungsrichtung (A) des Abgases schwenkbar ist.

7. Abgasklappenanordnung nach einem der vorhergehenden Ansprüche, **dadurch gekennzeichnet, dass** in einem unteren Abschnitt des Abgaskanals (2) eine Schwenkausnehmung, insbesondere eine Ausbauchung (27) ausgebildet ist, wobei bei Ausführung der Drehbewegung (D) der untere Teil (14) der Abgasklappe (8) durch die Schwenkausnehmung schwenkbar ist.

8. Abgasklappenanordnung nach einem der vorhergehenden Ansprüche, **dadurch gekennzeichnet, dass** das Bypassrohr (6) gegenüber der Bypassklappe (10) überstehend ausgebildet ist, wobei bevorzugt ein oberer Abschnitt des Bypasskanals (3) gegenüber einem unteren Abschnitt geringer überstehend ausgebildet ist.

9. Abgasklappenanordnung nach Anspruch 8, **dadurch gekennzeichnet, dass** der obere Abschnitt des Bypassrohres (6) an einer Außenseite abflachend und/oder als Freischnitt ausgebildet ist.

10. Abgasklappenanordnung nach einem der vorhergehenden Ansprüche, **dadurch gekennzeichnet, dass** eine Stirnseite des Bypassrohres (6) von oben nach unten verlaufend zunehmend gegenüber der Bypassklappe (10) überstehend ausgebildet ist, wobei insbesondere der Verlauf, progressiv zunehmend ausgebildet ist.

11. Abgasklappenanordnung nach einem der vorhergehenden Ansprüche, **dadurch gekennzeichnet, dass** die Bypassklappe (10) und/oder die Abgasklappe (8) eine runde, elliptische und/oder rechteckige Kontur aufweisen.

12. Abgasklappenanordnung nach einem der vorhergehenden Ansprüche, **dadurch gekennzeichnet, dass** die Welle (11) an beiden Seiten gelagert ist, insbesondere sind die Lager (13) außerhalb des Abgasrohres (4) angeordnet.

13. Abgasklappenanordnung nach einem der vorhergehenden Ansprüche, **dadurch gekennzeichnet, dass** die Abgasklappe (8) und/oder die Bypassklappe (10) im geschlossenen Zustand an einer Dichtkante (23) zur Anlage kommen und/oder dass die Bypassklappe (10) und/oder die Abgasklappe (8) eine Dichtkante (23) aufweisen.

14. Abgaswärmetauscher (28) für ein Kraftfahrzeug, wobei der Abgaswärmetauscher in einen Abgasstrang eines Kraftfahrzeuges eingliederbar ist und als geschweißtes Blechbauteil ausgebildet ist und mindestens zwei rohrförmig ineinander verschachtelte Kanäle (2, 3) aufweist, **dadurch gekennzeichnet, dass** in dem Abgaswärmetauscher (28) eine Abgasklappenanordnung (1) nach Anspruch 1 angeordnet ist.

15. Abgaswärmetauscher nach Anspruch 14, **dadurch gekennzeichnet, dass** die Abgasklappenanordnung (1) in einer Schweißhülse (33) angeordnet ist, wobei die Schweißhülse (33) in Längsrichtung (30) einen Teil der Außenmantelfläche des Abgaswärmetauschers (28) ausbildet.

16. Abgaswärmetauscher nach Anspruch 14 oder 15, **dadurch gekennzeichnet, dass** der Abgaswärmetauscher (28) einen außenliegenden rohrförmigen Abgaskanal (2) aufweist und einen in dem Abgaskanal (2) liegenden rohrförmigen Bypasskanal (3), wobei in dem Abgaskanal (2) eine Spiralleitung (36) ausgebildet ist, zur Durchführung eines durch das Abgas zu erwärmenden Fluides.

17. Abgaswärmetauscher nach einem der Ansprüche 14 bis 16, **dadurch gekennzeichnet, dass** an dem Bypassrohr (6) eine Stützwand (39) angeordnet ist, wobei das Bypassrohr (6) über die Stützwand (39) in dem Abgasrohr (4) gelagert ist.

## Claims

1. Exhaust flap arrangement (1) for an exhaust gas system of a motor vehicle, wherein the exhaust flap arrangement (1) has an exhaust channel (2) in the form of an exhaust pipe (4), in which a bypass channel (3) in the form of a bypass pipe (6) is arranged internally and concentrically, wherein the bypass pipe (6) is closable by a rotatable bypass flap (10), **characterised in that** the exhaust pipe (4) is closable by a rotatable exhaust gas flap (8), wherein the exhaust flap (8) has a recess (16) in which the bypass pipe (6) is arranged, wherein the bypass flap (10) and the exhaust gas flap (8) are mounted to rotate on the same shaft (11) about a rotation axis (9).

2. Exhaust flap arrangement according to claim 1, **characterised in that** the exhaust gas flap (8) and/or the bypass flap (10) are formed as rotatable butterfly flaps.

3. Exhaust flap arrangement according to one of the preceding claims, **characterised in that** the bypass flap (10) and/or the exhaust flap (8) can be controlled via an actuator, in particular via an electrical positioning actuator.

4. Exhaust flap arrangement according to one of the preceding claims, **characterised in that** the exhaust gas flap (8) comprises a stepped offset (17), in particular wherein a lower part (14) of the exhaust gas flap (8) is arranged offset with respect to an upper part (15) of the exhaust gas flap (8), in particular offset in parallel.

5. Exhaust flap arrangement according to claim 4, **characterised in that** the lower part (14) of the exhaust gas flap (8) has a greater cross-sectional area than the upper part (15).

6. Exhaust flap arrangement according to claim 4 or 5, **characterised in that** the lower part (14) of the exhaust gas flap (8) is pivotable about the rotation axis in the flow direction (A) of the exhaust gas upon execution of the rotary movement (D), wherein the upper part (15) of the exhaust flap is pivotable against the flow direction (A) of the exhaust gas and/or wherein the upper part (19) of the bypass flap (10) is pivotable about the rotation axis (9) in the flow direction (A) of the exhaust gas upon execution of the rotary movement (D), wherein the lower portion (19) of the bypass flap (10) is pivotable against the flow direction (A) of the exhaust gas.

7. Exhaust flap arrangement according to one of the preceding claims, **characterised in that** a pivot recess, in particular a bulge (27), is formed in a lower portion of the exhaust channel (2), wherein upon executing the rotary movement (D), the lower part (14) of the exhaust flap (8) is pivotable by means of the pivot recess.

8. Exhaust flap arrangement according to one of the preceding claims, **characterised in that** the bypass pipe (6) is formed to protrude relative to the bypass flap (10), wherein preferably an upper portion of the bypass channel (3) is formed to protrude less with respect to a lower portion.

9. Exhaust flap arrangement according to claim 8, **characterised in that** the upper portion of the bypass tube (6) is flattened on an outer side and/or is designed as a free cut.

10. Exhaust flap arrangement according to one of the preceding claims, **characterised in that** one end of the bypass tube (6) is formed to protrude progressively from top to bottom relative to the bypass flap (10), wherein, in particular, the profile is progressively increasingly formed.

11. Exhaust flap arrangement according to one of the preceding claims, **characterised in that** the bypass flap (10) and/or the exhaust flap (8) have a circular, elliptical and/or rectangular contour.

12. Exhaust flap arrangement according to one of the preceding claims, **characterised in that** the shaft (11) is supported at both sides, in particular the bearings (13) are arranged outside the exhaust pipe (4).

13. Exhaust flap arrangement according to one of the preceding claims, **characterised in that** the exhaust gas flap (8) and/or the bypass flap (10) come to rest against a sealing edge (23) in the closed state, and/or **in that** the bypass flap (10) and/or the exhaust flap (8) have a sealing edge (23).

14. Exhaust gas heat exchanger (28) for a motor vehicle, wherein the exhaust gas heat exchanger can be installed in an exhaust line of a motor vehicle and is formed as a welded sheet metal component and has at least two tubular channels (2, 3) nesting in one another, **characterised in that** an exhaust flap arrangement (1) according to claim 1 is arranged in the exhaust gas heat exchanger (28).

15. Exhaust gas heat exchanger according to claim 14, **characterised in that** the exhaust flap arrangement (1) is arranged in a welding sleeve (33), wherein the welding sleeve (33) forms a part of the outer surface of the exhaust gas heat exchanger (28) in the longitudinal direction (30).

16. Exhaust gas heat exchanger according to claim 14 or 15, **characterised in that** the exhaust gas heat exchanger (28) comprises an outer tubular exhaust channel (2) and a tubular bypass channel (3) lying in the exhaust channel (2), wherein a spiral pipe (36) is formed in the exhaust channel (2) for the passage of a fluid to be heated by the exhaust gas.

17. Exhaust gas heat exchanger according to any one of the claims 14 to 16, **characterised in that** a supporting wall (39) is arranged on the bypass pipe (6), wherein the bypass pipe (6) is supported in the exhaust pipe (4) via the supporting wall (39).

## Revendications

1. Agencement de clapet de gaz d'échappement (1) pour un système de gaz d'échappement d'un véhicule automobile, l'agencement de clapet de gaz d'échappement (1) comportant un canal de gaz d'échappement (2) qui est formé par un tuyau de gaz d'échappement (4) et dans lequel un canal de dérivation (3) formé par un tuyau de dérivation (6) est agencé à l'intérieur de façon concentrique, le tuyau de dérivation (6) pouvant être fermé par un clapet de dérivation (10) rotatif, **caractérisé en ce que** le tuyau de gaz d'échappement (4) peut être fermé par un autre clapet de gaz d'échappement (8) rotatif, le clapet de gaz d'échappement (8) comportant un évidement (16) dans lequel le tuyau de dérivation (6) est agencé et le clapet de dérivation (10) et le clapet de gaz d'échappement (8) étant montés sur le même arbre (11) de manière à pouvoir tourner autour d'un axe de rotation (9) .

2. Agencement de clapet de gaz d'échappement selon la revendication 1, **caractérisé en ce que** le clapet de gaz d'échappement (8) et/ou le clapet de dérivation (10) sont conçus comme des clapets papillons rotatifs.

3. Agencement de clapet de gaz d'échappement selon l'une des revendications précédentes, **caractérisé en ce que** le clapet de dérivation (10) et/ou le clapet de gaz d'échappement (8) peuvent être commandés par l'intermédiaire d'un actionneur, notamment par l'intermédiaire d'un actionneur de réglage électrique.

4. Agencement de clapet de gaz d'échappement selon l'une des revendications précédentes, **caractérisé en ce que** le clapet de gaz d'échappement (8) comporte un déport en gradins (17), une partie inférieure (14) du clapet de gaz d'échappement (8) étant notamment agencée de manière déportée par rapport à une partie supérieure (15) du clapet de gaz d'échappement (8), notamment de manière déportée parallèlement.

5. Agencement de clapet de gaz d'échappement selon la revendication 4, **caractérisé en ce que** la partie inférieure (14) du clapet de gaz d'échappement (8) a une plus grande surface de section transversale que la partie supérieure (15).

6. Agencement de clapet de gaz d'échappement selon la revendication 4 ou 5, **caractérisé en ce que**, lors de la réalisation du mouvement de rotation (D) autour de l'axe de rotation, la partie inférieure (14) du clapet de gaz d'échappement (8) peut être pivotée dans la direction d'écoulement (A) du gaz d'échappement, la partie supérieure (15) du clapet de gaz d'échappement pouvant être pivotée à l'encontre de la direction d'écoulement (A) du gaz d'échappement et/ou **en ce que**, lors de la réalisation du mouvement de rotation (D) autour de l'axe de rotation (9), la partie supérieure (19) du clapet de dérivation (10) peut être pivotée dans la direction d'écoulement (A) du gaz d'échappement, la partie inférieure (19) du clapet de dérivation (10) pouvant être pivotée à l'encontre de la direction d'écoulement (A) du gaz d'échappement.

7. Agencement de clapet de gaz d'échappement selon l'une des revendications précédentes, **caractérisé en ce qu'**un évidement de pivotement, notamment un renflement (27), est conçu dans une partie inférieure du canal de gaz d'échappement (2), la partie inférieure (14) du clapet de gaz d'échappement (8) pouvant être pivotée à travers l' évidement de pivotement lors de la réalisation du mouvement de rotation (D).

8. Agencement de clapet de gaz d'échappement selon l'une des revendications précédentes, **caractérisé en ce que** le tuyau de dérivation (6) est conçu de manière à dépasser par rapport au clapet de dérivation (10), une partie supérieure du canal de dérivation (3) étant conçue de préférence de manière à moins dépasser par rapport à une partie inférieure.

9. Agencement de clapet de gaz d'échappement selon la revendication 8, **caractérisé en ce que** la partie supérieure du tuyau de dérivation (6) est conçue aplatie au niveau d'un côté extérieur et/ou comme une découpe.

10. Agencement de clapet de gaz d'échappement selon l'une des revendications précédentes, **caractérisé en ce qu'**un côté frontal du tuyau de dérivation (6) est conçu de manière à dépasser du clapet de dérivation (10) de plus en plus en allant de haut en bas, cette forme étant notamment conçue progressivement croissante.

11. Agencement de clapet de gaz d'échappement selon l'une des revendications précédentes, **caractérisé en ce que** le clapet de dérivation (10) et/ou le clapet de gaz d'échappement (8) ont un contour rond, elliptique et/ou rectangulaire.

12. Agencement de clapet de gaz d'échappement selon l'une des revendications précédentes, **caractérisé en ce que** l'arbre (11) est supporté des deux côtés, les paliers (13) étant notamment agencés en dehors du tuyau de gaz d'échappement (4).

13. Agencement de clapet de gaz d'échappement selon l'une des revendications précédentes, **caractérisé en ce que**, lorsqu'ils sont fermés, le clapet de gaz d'échappement (8) et/ou le clapet de dérivation (10) viennent s'appuyer contre une arête d'étanchéité (23) et/ou **en ce que** le clapet de dérivation (10) et/ou le clapet de gaz d'échappement (8) comportent une arête d'étanchéité (23).

14. Échangeur de chaleur de gaz d'échappement (28) pour un véhicule automobile, l'échangeur de chaleur de gaz d'échappement étant conçu comme une pièce de tôle soudée et de manière à pouvoir être intégré dans un système de gaz d'échappement d'un véhicule automobile et comportant au moins deux canaux (2, 3) emboîtés l'un dans l'autre en forme de tuyau, **caractérisé en ce qu'**un agencement de clapet de gaz d'échappement (1) selon la revendication 1 est agencé dans l'échangeur de chaleur de gaz d'échappement (28).

15. Échangeur de chaleur de gaz d'échappement selon la revendication 14, **caractérisé en ce que** l'agencement de clapet de gaz d'échappement (1) est agencé dans un manchon soudé (33), le manchon soudé (33) formant dans le sens de la longueur (30) une partie de la surface enveloppante extérieure de l'échangeur de chaleur de gaz d'échappement (28).

16. Échangeur de chaleur de gaz d'échappement selon la revendication 14 ou 15, **caractérisé en ce que** l'échangeur de chaleur de gaz d'échappement (28) comporte un canal de gaz d'échappement tubulaire (2) situé à l'extérieur et un canal de dérivation tubulaire (3) situé dans le canal de gaz d'échappement (2), un conduit en spirale (36) étant conçu dans le canal de gaz d'échappement (2) pour guider un fluide à chauffer au moyen du gaz d'échappement.

17. Échangeur de chaleur de gaz d'échappement selon l'une des revendications 14 à 16, **caractérisé en ce qu'**une paroi de soutien (39) est agencée sur le tuyau de dérivation (6), le tuyau de dérivation (6) étant logé dans le tuyau de gaz d'échappement (4) par l'intermédiaire de la paroi de soutien (39).
